# EUROPÄISCHE PATENTSCHRIFT

(11) **EP 0 654 877 B1**
(45) Veröffentlichungstag und Bekanntmachung des Hinweises auf die Patenterteilung: **03.02.1999**
(21) Anmeldenummer: 94118159.6
(22) Anmeldetag: 17.11.1994
(51) Int. Cl.: H02B 1/56, H05K 7/20, H02B 13/025

(54) **Schaltschrank mit Lüftungsöffnungen**
Switchgear cabinet with ventilation slots
Armoire de commutation avec ouvertures de ventilation

(30) Priorität: 18.11.1993 DE 4339383
(43) Veröffentlichungstag der Anmeldung: 24.05.1995
(73) Patentinhaber: AEG Niederspannungstechnik GmbH & Co. KG, 24531 Neumünster (DE)
(72) Erfinder: Grimm, Jörn, D-24253 Prasdorf (DE)
(74) Vertreter: Tiedtke, Harro, Dipl.-Ing.

(56) Entgegenhaltungen:
- DE-A- 2 330 163
- DE-A- 3 013 756
- DE-U- 9 108 281
- DE-U- 9 206 780
- DE-U- 9 207 380
- FR-A- 2 253 298
- SCHROFF GMBH, Oktober 1992 DE, Seite 34 'Komponenten für die Vernetzungs-technik'

## Beschreibung

Die Erfindung betrifft einen Schaltschrank gemäß dem Oberbegriff des Patentanspruchs 1.

Bei lichtbogenfesten, gekapselten Schaltschränken mit Schaltgeräten hoher Stromtragfähigkeit ist eine Be- und Entlüftungsvorrichtung unumgänglich. Zu diesem Zweck weisen die Schaltschränke in mindestens einer Seitenwand als Durchlaßöffnungen ausgebildete Lüfterjalousien auf, die parallel im Abstand voneinander in einem Halter angeordnete Lamellen aufweisen. Der Abstand dieser Lamellen voneinander kann aber, da sie ein Eindringen von Fremdkörpern verhindern und Regen abweisen müssen, nicht so groß gewählt werden, daß beim Auftreten eines Kurzschlusses oder Störlichtbogens der durch die explosionsartige Ausdehnung der Lichtbogengase erzeugte Druck nicht über einen zulässigen Wert hinaus ansteigt.

Es sind auch Schaltschränke mit Schaltgeräten hoher Stromtragfähigkeit bekannt, dessen Tür zumindest teilweise aus einem Blechteil besteht. Dieses Blechteil gibt bei einem gewissen Überdruck beim Auftreten eines Lichtbogenfehlers zwecks kontrollierter Druckentlastung im Schrank nach. Weiterhin ist dieses Blechteil mit schlitzartigen Lüftungsöffnungen zur Be- und Entlüftung bzw. zur Wärmeabfuhr versehen, welche auf der Außenseite des Schaltschrankes durch von einer ihrer Längskanten aus nach außen gewinkelte, lamellenartige Vorsprünge gegen Eindringen von Fremdkörpern geschützt sind. Das Blechteil soll dort, wo dies gefordert wird, der Forderung der Kapselungsklasse IP4 (gemäß ICE 529) entsprechen, nach der ein Hineinstecken eines Drahtes mit lmm Durchmesser nicht möglich ist. Zu diesem Zweck wurde die Innenseite des Schaltschrankes im Bereich der Lüftungsschlitze mit einem feinmaschigen Drahtnetz abgedeckt, wobei die Verbindung über eine Klebeverbindung erfolgte. Diese Verbindung hat aber den Nachteil, daß die Klebekraft des Klebers mit der Zeit derart nachläßt, daß das Drahtnetz abfällt. Danach wird die Forderung nach IP4 nicht mehr erfüllt.

Aus der DE 30 13 756 A1 ist ein Schaltschrank bekannt, der mit einer Schaltschranktüre versehen ist, auf deren Innenseite ein verschwenkbares Abdeckteil vorgesehen ist. Mittels dieses verschwenkbaren Abdeckteiles sollen die Lüftungsschlitze bei erhöhtem Druck im Schaltschrankinneren, bspw. beim Auftreten eines Lichtbogenfehlers, verschlossen werden, um ein Austreten der Lichtbogengase zu vermeiden. Im normalen Betriebszustand ist dieses Abdeckteil so angeordnet, daß dessen lamellenartige Vorsprünge korrespondierend zu den lamellenartigen Vorsprüngen auf der Außenseite der Türe zu liegen kommen, so daß die Durchtrittsöffnungen gegen das Eindringen von Fremdkörpern abgedeckt werden.

Der Erfindung liegt die Aufgabe zugrunde, einen Schaltschrank zu schaffen, der bei normalem Betrieb eine gute Be- und Entlüftung sicherstellt und gleichzeitig auf einfache Weise der Forderung nach Kapselungsklasse IP4 (gemäß ICE 529) gerecht werden kann und dabei kostengünstig herzustellen ist.

Diese Aufgabe wird durch die Merkmale des Patentanspruchs 1 gelöst. Der erfindungsgemäße Schaltschrank weist Lüftungsöffnungen auf, die durch lamellenartige Vorsprünge an der Tür des Schaltschrankes und dem Abdeckteil gebildet werden. Die Vorsprünge sind so vorgesehen, daß sich eine V-förmige Dachform ergibt, die verhindert, daß einerseits Fremdkörper durch die Lüftungsöffnungen in den Schaltschrank eindringen können und andererseits eine ausreichende Be- und Entlüftung gewährleisten. Eine kostengünstige Herstellung wird dadurch gewährleistet, daß das Abdeckteil aus einem billig herzustellenden Kunststoffspritzteil besteht, welches an die Innenseite der Tür des Schaltschrankes leicht und dauerhaft anzubringen ist. Die Forderung der Kapselungsklasse IP4 wird sicher erfüllt. Weitere vorteilhafte Ausgestaltungen des Erfindungsgegenstandes sind den weiteren Unteransprüchen zu entnehmen. Die Erfindung wird anhand eines Ausführungsbeispiels im folgenden näher beschrieben. Es zeigen:
- Figur 1: die Tür eines Schaltschrankes mit Lüftungsöffnungen,
- Figur 2: eine schaubildliche Darstellung des Abdeckteiles,

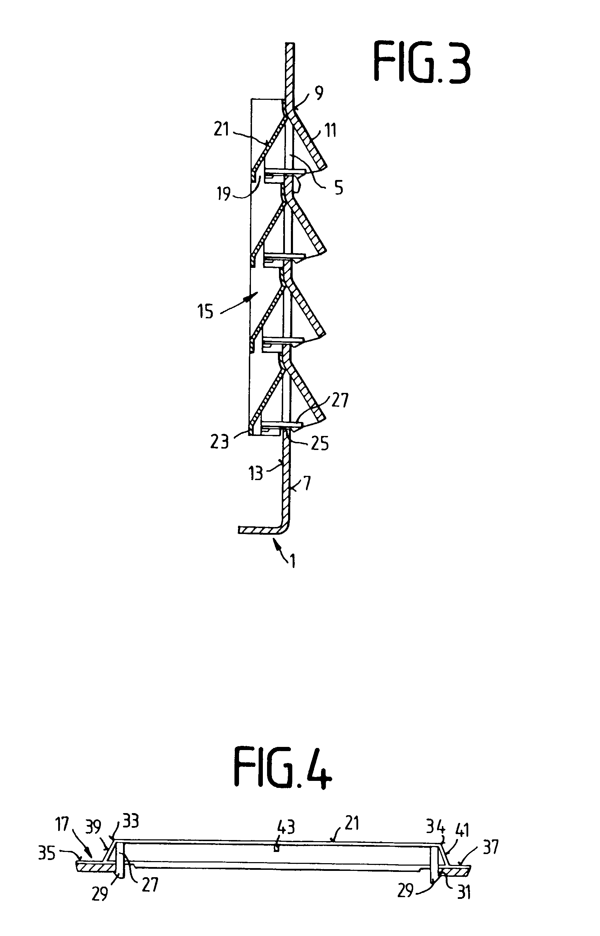

- Figur 3: die Tür und das Abdeckteil im Schnitt und
- Figur 4: das Abdeckteil im Schnitt.

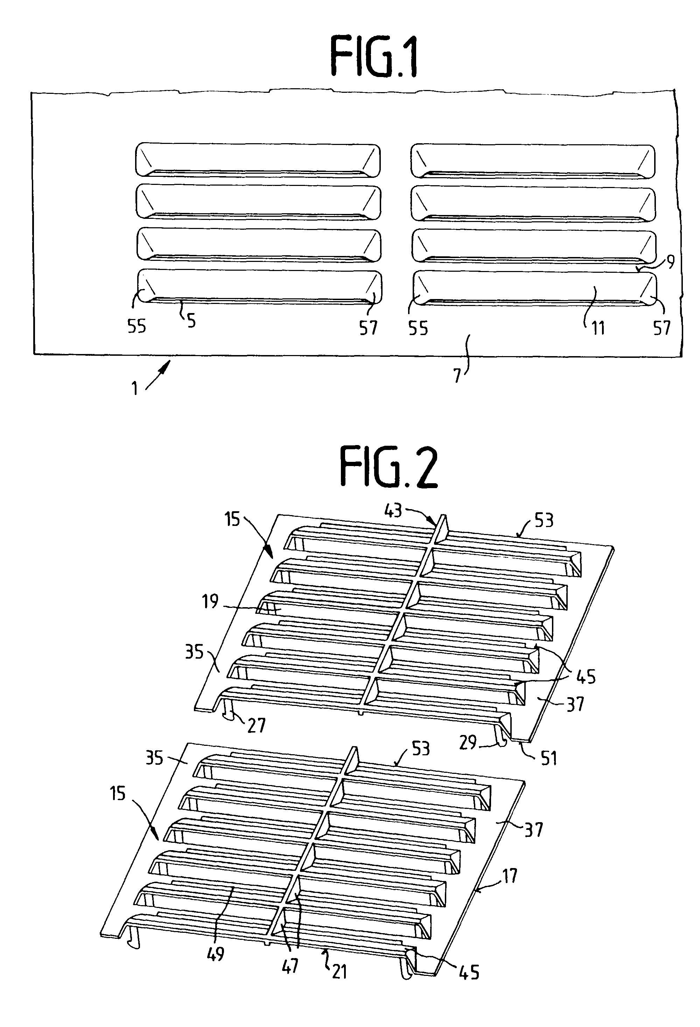

Die Figur 1 zeigt eine Tür 1 eines Schaltschrankes, in dem Schaltgeräte hoher Stromtragfähigkeit angeordnet sind. Die aus einem Blechteil bestehende Tür 1 gibt bei einem gewissen Überdruck beim Auftreten eines Lichtbogenfehlers zwecks kontrollierter Druckentlastung im Schrank nach. Weiterhin ist diese Tür 1 mit schlitzartigen Lüftungsöffnungen 5 zur Ent- bzw. Belüftung versehen, welche auf der Außenseite 7 des Schaltschrankes durch von einer ihrer Längskanten 9 nach außen abgewinkelte, lamellenartige Vorsprünge 11 gegen Eindringen von Fremdkörpern geschützt sind. Die Innenseite 13 des Schaltschrankes ist im Bereich der Lüftungsöffnungen 5 mit einem Abdeckteil 15 fest verbunden, durch die ein Hineinstecken von Drähten mit einem Durchmesser von 1mm nach der Forderung der Kapselungsklasse IP4 bzw. IEC 259 sicher verhindert.

Das Abdeckteil 15 besteht aus einer mit der Innenseite 13 der Tür 1 des Schaltschrankes befestigbaren Grundplatte 17, welche den schlitzartigen Lüftungsöffnungen 5 in der Tür 1 entsprechend ausgebildete Durchtrittsschlitze 19 mit als Überdachungen dienende, nach innen abgewinkelte lamellenartige Vorsprünge 21 aufweist. Die lamellenartigen Vorsprünge 11, 21 an der Tür 1 und dem Abdeckteil 15 bilden eine V-förmige Dachform, wobei die unteren freien Enden 23 der lamellenartigen Vorsprünge 21 an dem Abdeckteil 15 gegenüber den unteren Längskanten 25 der Lüftungsöffnungen 5 tiefer versetzt angeordnet sind. Das Abdeckteil 15 besteht aus einem Spritzteil aus Kunststoff mit federnden Schnapphaken 27, deren Rastnasen 29 hinter den Seitenkanten 31 der Lüftungsöffnungen 5 verrastbar sind. Die freien Enden 33, 34 der lamellenartigen Vorsprünge 21 sind mit den Seitenwänden 35, 37 der Grundplatte 17 über Schrägflächen 39, 41 fest verbunden. Ein sicheres Einrasten des Abdeckteiles an der Innenseite 13 der Tür 1 des Schaltschrankes wird dadurch gewährleistet, daß je ein Schnapphaken 27 an jedem Ende 33, 34 der Vorsprünge 21 angeordnet ist. Das Abdeckteil 15 ist einfach zu montieren und erfüllt auf einfachste Weise die Forderung nach der Kapselungsklasse IP4 bzw. IEC 529.

Eine einfache Versteifung des Abdeckteiles 15 wird dadurch erzielt, daß das Abdeckteil 15 einen mittig zu seiner Längsseite angeordnete Querverbindungssteg 43 aufweist, welcher mit den Außenseiten 45 der lamellenartigen Vorsprünge 21 und über Rippen 47 mit den zwischen den Vorsprüngen 21 gelegenen Teilen 49 der Grundplatte 17 fest verbunden ist.

Zur Fertigungs- und Montageerleichterung können mehrere Abdeckteile 15 zu einer größeren Abdeckeinheit zusammengefügt oder auch zu kleineren Abdeckeinheiten eingekürzt werden. Daher weist jedes Abdeckteil 15 z. B. sechs Durchtrittsschlitze 19 auf, von denen die eine Längsseite 51 des unteren Durchtrittsschlitzes 19 eines ersten Abdeckteiles durch die obere Längskante 53 der Grundplatte 17 eines zweiten Abdeckteiles beim Zusammenfügen von zwei Abdeckteilen 15 verschließbar ist. Die Abdeckteile 15 können also teilungsgenau zusammengefügt werden.

Die freien Enden der lamellenartigen Vorsprünge 11 sind über Schrägflächen 55, 57 mit der Tür 1 verbunden. Die Tür 1 mit den abgewinkelten, lamellenartigen Vorsprüngen 11 wird durch Stanzen und Pressen in einem Arbeitsgang hergestellt.

## Patentansprüche

1. Schaltschrank mit Schaltgeräten hoher Stromtragfähigkeit, dessen eine Tür (1) mit schlitzartigen Lüftungsöffnungen (5) zur Wärmeabfuhr bzw. zur Ent- und Belüftung versehen ist, welche auf der Außenseite des Schaltschrankes durch von einer ihrer Längskanten aus nach außen abgewinkelte, lamellenartige Vorsprünge (11) gegen Eindringen von Fremdkörpern und auf der Innenseite des Schaltschrankes durch ein dort befestigtes Abdeckteil (15) gegen Hineinstecken von Drähten geschützt sind, wobei das Abdeckteil (15) aus einer mit der Innenseite (13) der Tür (1) des Schaltschrankes befestigbaren Grundplatte (17) besteht, welche den schlitzartigen Lüftungsöffnungen (5) in der Tür (1) entsprechend ausgebildete Durchtrittsschlitze (19) mit als Überdachungen dienende, nach innen abgewinkelte, lamellenartige Vorsprünge (21) aufweist und die unteren freien Enden (23) der lamellenartigen Vorsprünge (21) an dem Abdeckteil (15) gegenüber den unteren Längskanten (25) der Lüftungsöffnungen (5) tiefer versetzt angeordnet sind,
**dadurch gekennzeichnet**, daß die Tür zumindest teilweise aus einem Blechteil besteht, das bei einem gewissen Überdruck beim Auftreten eines Lichtbogenfehlers zwecks kontrollierter Druckentlastung im Schaltschrank nachgibt, und daß das Abdeckteil (15) aus einem Spritzteil aus Kunststoff besteht und mittels an diesem ausgebildeten federnden Schnapphaken (27), deren Rastnasen (29) hinter den Seitenkanten (31) der Lüftungsöffnungen (5) verrastbar sind, so an der Türe (1) anbringbar ist, daß die lamellenartigen Vorsprünge (11, 21) an der Tür (1) und dem Abdeckteil (15) eine V-förmige Dachform bilden.

2. Schaltschrank nach Anspruch 1, **dadurch gekennzeichnet,** daß die Enden (33, 34) der lamellenartigen Vorsprünge (21) mit den Seitenkanten (35, 37) der Grundplatte (17) über Schrägflächen (39, 41) verbunden sind.

3. Schaltschrank nach Anspruch 2, **dadurch gekennzeichnet**, daß je ein Schnapphaken (27) an jedem Ende (33, 34) der Vorsprünge (21) angeordnet ist.

4. Schaltschrank nach einem der vorhergehenden Ansprüche, **dadurch gekennzeichnet**, daß das Abdeckteil (15) einen mittig zu seiner Längsseite angeordneten Querverbindungssteg (43) aufweist, welcher mit den Außenseiten (45) der lamellenartigen Vorsprünge (21) und über Rippen (47) mit den zwischen den Vorsprüngen (21) gelegenen Teilen (49) der Grundplatte (17) fest verbunden ist.

5. Schaltschrank nach einem der vorhergehenden Ansprüche, **dadurch gekennzeichnet**, daß mehrere Abdeckteile (15) zu einer größeren Abdeckeinheit zusammenfügbar sind.

6. Schaltschrank nach Anspruch 6, **dadurch gekennzeichnet**, daß jedes Abdeckteil (15) mehrere parallel zueinander angeordnete Durchtrittsschlitze (19) aufweist, von denen die eine Längsseite (51) des unteren Durchtrittsschlitzes (19) eines ersten Abdeckteiles durch die obere Längskante (53) der Grundplatte (17) eines zweiten Abdeckteiles beim Zusammenfügen von zwei Abdeckteilen (15) verschließbar ist.

7. Schaltschrank nach einem der vorhergehenden Ansprüche, **dadurch gekennzeichnet,** daß das Abdeckteil (15) zu einer kleineren Abdeckeinheit einkürzbar ist.

## Claims

1. Switchgear cabinet with switchgear of high current capacity, of which a door (1) is provided with slot-like ventilation openings (5) for heat removal or for venting out and venting in of air, which openings are protected on the outer side of the switchgear cabinet by plate-like projections (11), which are angled outwardly from one of their longitudinal edges, against ingress of foreign bodies and on the inner side of the switchgear cabinet by a cover member (15), which is fastened there, against the sticking in of wires, wherein the cover member (15) consists of a base plate (17) which is fastenable with the inner side (13) of the door (1) of the switchgear cabinet and which has passage slots (19), which are constructed in correspondence with the slot-like ventilation openings (5) in the door (1), with inwardly angled plate-like projections (21) serving as roofs, and the lower free ends (23) of the plate-like projections (21) at the cover member (15) are arranged to be offset deeper relative to the lower longitudinal edges (25) of the ventilation openings (5), characterised in that the door consists at least partially of a sheet metal part which at a certain excess pressure on the occurrence of an arc fault deflects for the purpose of controlled pressure relief in the switchgear cabinet, and that the cover member (15) consists of an injection-moulded part of synthetic material and is so mountable at the door (1) by means of resilient snap hooks (27), which are formed at the injection-moulded part and the detent lugs (29) of which can detent behind the side edges (31) of the ventilation openings (5), that the plate-like projections (11, 21) at the door (1) and the cover member (15) form a V-shaped roof form.

2. Switchgear cabinet (1) according to claim 1, characterised in that the ends (33, 34) of the plate-like projections (21) are connected with the side edges (35, 37) of the base plate (17) by way of inclined surfaces (29, 41).

3. Switchgear cabinet (1) according to claim 2, characterised in that a respective snap hook (27) is arranged at each end (33, 34) of the projections (21).

4. Switchgear cabinet (1) according to one of the preceding claims, characterised in that the cover member (15) comprises a transverse connecting web (43) which is arranged centrally with respect to its longitudinal side and which is firmly connected with the outer sides (45) of the plate-like projections (21) and by way of ribs (47) with the parts (49), which are laid between the projections (21), of the base plate (17).

5. Switchgear cabinet (1) according to one of the preceding claims, characterised in that several cover members (15) can be combined into a larger cover unit.

6. Switchgear cabinet (1) according to claim 6, characterised in that each cover member (15) has several passage slots (19) which are arranged parallel to each other and of which the one longitudinal side (51) of the lower passage slot (19) of a first cover member is closable by the upper longitudinal edge (53) of the base plate (17) of a second cover member when two cover members (15) are combined together.

7. Switchgear cabinet (1) according to one of the preceding claims, characterised in that the cover member (15) can be shortened down to a smaller cover unit.

## Revendications

1. Armoire de commutation comprenant des appareils de commutation de folie capacité électrique, dont la porte (1) est pourvue d'ouvertures d'aération en forme de fentes (5) pour l'évacuation de chaleur respectivement l'amenée et d'évacuation d'air, lesdites ouvertures étant protégées sur la face extérieure de l'armoire de commutation à l'encontre de la pénétration de corps étrangers par des saillies en forme de lamelles (11) recourbées vers l'extérieur depuis l'une de leurs arêtes longitudinales, et protégées sur la face intérieure de l'armoire de commutation à l'encontre de l'introduction de fils par une pièce de couverture (15) fixée à cet endroit, ladite partie de couverture (15) comprenant une plaque de base (17) susceptible d'être fixée sur la face intérieure (13) de la porte (1) de l'armoire, ladite plaque de base comportant des fentes traversantes (19) avec des saillies en forme de lamelles (21) recourbées vers l'intérieur et servant de "toitures" réalisées en correspondance aux ouvertures d'aération (5) en forme de fentes dans la porte (1), et les extrémités libres inférieures (23) des saillies en forme de lamelles (21) sur la pièce de couverture (15) étant agencées de façon décalée plus bas que les arêtes longitudinales inférieures (25) des ouvertures d'aération (5),
caractérisée en ce que la porte est au moins partiellement constituée par une pièce en tôle qui cède sous une certaine surpression lors de l'apparition d'un arc électrique parasite dans le but d'assurer une décharge contrôlée de la pression dans l'armoire de commutation, et en ce que la pièce de couverture (15) est une pièce injectée en matière plastique susceptible d'être montée sur la porte (1), au moyen de crochets d'enclenchement(27) élastiques réalisés sur la pièce de couverture, dont les ergots d'enclenchement (29) sont capables de s'enclencher derrière les arêtes latérales (31) des ouvertures d'aération (5), de telle façon que les saillies en forme de lamelles (11, 21) sur la porte (1) et sur la pièce de couverture (15) constituent une toiture en forme de V.

2. Armoire de commutation selon la revendication 1, caractérisée en ce que les extrémités (33, 34) des saillies en forme de lamelles (21) sont reliées aux arêtes latérales (35, 37) de la plaque de base (17) par l'intermédiaire de surfaces obliques (39, 41).

3. Armoire de commutation selon la revendication 2, caractérisée en ce qu'un crochet d'enclenchement (27) respectif est agencé à chaque extrémité (33, 34) des saillies (21).

4. Armoire de commutations selon l'une des revendications précédentes caractérisée en ce que la partie de couverture (15) comporte une barrette de liaison transversale (43) agencée au milieu par rapport à son côté long, ladite barrette de liaison étant reliée aux faces extérieures (45) des saillies (21) en forme de lamelles, et aux parties (49) de la plaque de base (17) situées entre les saillies (21) par l'intermédiaire de nervures (47).

5. Armoire de commutation selon l'une des revendications précédentes caractérisée en ce que plusieurs pièces de couverture (15) sont susceptibles d'être assemblées pour former une unité de couverture de plus grande taille.

6. Armoire de commutation selon la revendication 5, caractérisée en ce que chaque pièce de couverture (15) comprend plusieurs fentes traversantes (19) agencées parallèlement les unes aux autres, parmi lesquelles l'un des côtés longitudinaux (51) de la fente traversante inférieure (19) d'une première pièce de couverture est susceptible d'être obturée par l'arête longitudinale supérieure (53) de la plaque de base (17) d'une seconde pièce de couverture lors de l'assemblage de deux pièces de couverture (15).

7. Armoire de commutation selon l'une des revendications précédentes, caractérisée en ce que la pièce de couverture (15) est susceptible d'être raccourcie pour former une unité de couverture plus petite.
